# EUROPÄISCHE PATENTANMELDUNG

(11) **EP 4 286 814 A1**
(43) Veröffentlichungstag der Anmeldung: **06.12.2023**
(21) Anmeldenummer: 22176480.6
(22) Anmeldetag: 31.05.2022
(51) Int. Cl.: G01L 5/101, G01L 5/105, D07B 1/14, G01L 1/24

(54) **BETRIEB EINES SCHLEPPKABELS**

(71) Anmelder: Siemens Aktiengesellschaft, 80333 München (DE)
(72) Erfinder: JUNGFER, Helmar, 91058 Erlangen (DE); SCHINDLER, Thomas, 90574 Roßtal (DE); DE BONI, Christiano, 72070 Tübingen (DE); TURCATI, Andrea, 81547 München (DE); GAEBELE, Markus, 3116 Victoria (AU)
(74) Vertreter: Siemens Patent Attorneys

(57) **Zusammenfassung**

Bei einem Verfahren zum Betrieb eines Kabels (1), weist das Kabel (1) einen Sensor (2) zum Erkennen einer Nutzung des Kabels (1) auf, wobei Sensorsignale (3) gespeichert werden, wobei sich mittels der Sensorsignale (3) eine Charakteristik für das Kabel (1) ergibt, wobei eine Vielzahl von Charakteristiken zu verschiedenen Zeiten ermittelt werden, wobei die Charakteristiken zusammen ausgewertet werden. Dieses Verfahren kann in einer Anlage mit einem Kabel (1), insbesondere einem Schleppkabel, zur elektrischen Energieversorgung, eingesetzt werden, wobei das Schleppkabel einen Sensor (2) im Kabel (1) aufweist.

## Beschreibung

Die Erfindung betrifft ein Verfahren zum Betrieb eines Kabels, insbesondere eines Schleppkabels.

Der Betrieb betrifft eine Überwachung, Fehlervorhersage bzw. eine Betriebsoptimierung des Schleppkabels. Das Schleppkabel dient insbesondere einer HV/LV-Stromversorgung. HV steht für High Voltage, also Hochspannung. LV steht für Low Voltage, also Niederspannung. Bei bewegten Anwendungen kommen regelmäßig Schleppkabel zum Einsatz. Bewegte Anwendungen lassen sich beispielsweise bei Kränen, insbesondere in Hafenanlagen, im Bergbau oder bei Halden finden.

Sich bewegende Anwendungen (Applikationen), insbesondere mit einer Hochspannungsversorgung an Board, die über ein aufgerolltes Kabel zur Verfügung gestellt wird, haben als eine der häufigen Ausfallursachen einen Kabelschaden, verursacht durch eine ungünstige mechanische Belastung, insbesondere ausgelöst durch eine falsche Kabelführung und/oder einen ungeeigneten Betrieb der Applikation. So kann es zu einem Applikationsausfall durch eine mechanische Belastung eines Kabels kommen, welche zu einem elektrischen Schaden führt. Die Belastung spiegelt eine Nutzung des Kabels wider. Unter einem Applikationsausfall ist beispielsweise der Ausfall eines Krans, eines Gurtförderers, eines Baggers, wie eines Braunkohlebaggers, etc., zu verstehen. Der Applikationsausfall kann also den Ausfall einer technischen Anlage bzw. einen Teilausfall einer technischen Anlage bedeuten. Die mechanische Belastung eines Kabels, eines elektrischen Kabels, kann überwacht bzw. gemessen werden. Damit wird also auch die Nutzung des Kabels überwacht bzw. gemessen. Die Belastung ist insbesondere ein Maß der Nutzung. So kann ein Kabel, also ein elektrisches Kabel, beispielsweise einen Lichtwellenleiter aufweisen. Mit Hilfe dieses in das Kabel integrierten Lichtwelleinleiters, kann die mechanische Belastung gemessen werden.

Eine Aufgabe der Erfindung ist es, Informationen über die Belastung des Kabels, insbesondere des elektrischen Kabels, vorteilhaft für den Betrieb des Kabels zu verwenden, wobei das Kabel insbesondere ein Schleppkabel ist.

Eine Lösung der Aufgabe ergibt sich bei einem Verfahren nach Anspruch 1 und einer Vorrichtung nach Anspruch 7. Weitere Ausgestaltungen ergeben sich beispielsweise nach den Ansprüchen 2 bis 6

Bei einem Verfahren zum Betrieb eines Kabels weist das Kabel einen Sensor zum Erkennen einer Nutzung, insbesondere einer Belastung, des Kabels auf, wobei Sensorsignale gespeichert werden, wobei sich mittels der Sensorsignale eine Charakteristik für das Kabel ergibt, wobei eine Vielzahl von Charakteristiken zu verschiedenen Zeiten ermittelt werden, wobei die Charakteristiken zusammen ausgewertet werden. Unter einem Sensor soll hier auch ein Element eines Sensors verstanden werden. Ein Sensorelement ist beispielsweise ein Lichtwellenleiter. Hier kann dann noch z.B. eine Lichtquelle und/oder ein Halbleiter zum Erfassen von Licht mit als zum Sensor gehörig betrachtet werden. Die Charakteristik ist insbesondere ein Datum bzw. ein Datensatz. Die Charakteristik betrifft also die Nutzung bzw. Belastung des Kabels. Der Sensor weist beispielsweise eine Glasfaser auf. Mit Hilfe des Sensors kann beispielsweise eine Verdrehung, Biegung, Streckung und/oder Stauchung des Kabels festgestellt werden. Dies sind Umstände, welche die Nutzung des Kabels betreffen. Insbesondere kann auch der Ort einer Verdrehung, Biegung, Streckung und/oder Stauchung des Kabels festgestellt werden. Der Ort betrifft eine Position am Kabel. Also beispielsweise 3 Meter oder 58 Meter von einem Anfang oder Ende des Kabels entfernt.

Bei einem Kabel kann also nicht nur die mechanische Belastung des Kabels gemessen werden, wobei bei einer Grenzwertüberschreitung eine Warnleuchte angeht. Durch die Speicherung der Charakteristik eines Kabels zu verschiedenen Zeiten, kann eine Tendenz/Entwicklung der Integrität des Kabels durchgeführt werden. Ja es kann sogar eine weitere Beanspruchung des Kabels vorhergesagt werden und damit z.B. auch dessen Abnutzung oder dessen Ausfall, wenn man die zukünftige Nutzung simuliert. Dies bedeutet, dass man z.B. die Anzahl von Betriebszyklen einer Anlage mit dem überwachten Kabel vorgibt und errechnen lässt, welche Auswirkungen dies auf das Kabel hat. So wird nicht nur ein Condition Monitoring des Kabels ermöglicht, sondern auch eine Vorhersage. Diese hilft beim Ansatz predictive maintanance durchzuführen. Dies gelingt insbesondere durch die Verwendung einer Korrelation der Daten über das Kabel zu der Applikation, in der das Kabel verwendet wird. So können predictive Eigenschaften, also Vorhersagen, über das Kabel getroffen werden. Diese Eigenschaften lassen sich insbesondere bei einem Kabel gewinnen, welches einen integrierten Lichtwellenleiter aufweist. So können mechanische Belastungen eines HV Kabels gemessen werden. Die Messung einer mechanischen Belastung an Lichtwellenleitern basiert beispielsweise auf einer sich ändernden Wellenlänge der Referenzwellenlänge des Messsignals.

Durch die Auswertung der Charakteristiken können verschiedene Funktionalität erzielt werden, wie z.B.:
- Eine frühzeitige Erkennung einer falschen Belastung des Kabels, die später einen Schaden auslöst bzw. auslösen kann,
- Ein Erkennen eines Zusammenhangs zwischen dem Betrieb einer Applikation bzw. einem Produktionsverhalten und dem Kabel, das dabei Verwendung findet,
- Eine Optimierung des Applikationsbetriebs, um einen Kabelschaden zu vermeiden,
- Ein Detektieren eines Applikationsfehlers basierend auf der mechanischen Messung und/oder
- Eine Ermittlung einer verbleibenden Lebensdauer des Kabels basierend auf den Betriebsdaten der Applikation und den Belastungsdaten des Kabels.

Die Charakteristik ist eine Art Fingerabdruck (finger print) des Kabels. Durch diese lassen sich also verschiedenste Funktionalitäten generieren.

In einer Ausgestaltung des Verfahrens betrifft die Charakteristik des Kabels zumindest 80% der Länge des Kabels. Die Charakteristik kann auch die gesamte Länge des Kabels betreffen. So kann ein Fingerprint des Kabels, welches das Messsignal des Sensors betrifft bzw. ist, beispielsweise über die gesamte Kabellänge aufgezeichnet werden. Die Aufzeichnung erfolgt beispielsweise in festgelegten zeitlichen Abständen (z.B. jede Minute, jede Stunde, jeden Tag, jeden Monat etc.) und/oder in bestimmten Betriebszuständen (z.B. das Kabel ist ruhend, das Kabel ist bewegt, das Kabel ist aufgewickelt, das Kabel ist abgewickelt, etc.). Beispielsweise kann sich der Fingerprint, also die Charakteristik, des Kabels über die ersten 3 Monate nach einer Inbetriebsetzung durch die mechanische Auf- und Abrollbelastung verändern. Die Entwicklung des Finterprints kann von Beginn an simuliert und/oder vorhergesagt werden, so dass ab Tag eins eine Aussage über den Zustand des Kabels möglich ist. Zur Simulation bzw. Vorhersage wird insbesondere die Anzahl der Auf- und Abrollbewegungen des Kabels auf einer Kabeltrommel mitberücksichtigt. So wird also die erwartete künftige Applikation, also der erwartete künftige Betrieb, bei der Vorhersage von Kabeldaten (z.B. Abnutzung, Haltbarkeit, etc.) mitberücksichtigt. Diese beschriebenen Funktionalitäten können natürlich nicht nur nach 3 Monaten ab Inbetriebsetzung zum Einsatz kommen, sondern auch zu anderen Zeiträumen auch unterschiedlicher Länge. So kann beispielsweise ermittelt werden, ob bis zum nächsten erwarteten Wartungsintervall und bei einer erwarteten vorgegebenen Nutzung/Applikation mit einem Ausfall des Kabels zu rechnen ist, bzw. dieser mit einer gewissen Wahrscheinlichkeit eintritt. So kann beispielsweise ermittelt werden, ob bei einer geänderten Nutzung (z.B. langsameres Aufrollen oder Abrollen) der erwartete Ausfall hinausgezögert werden kann (insbesondere wie lange).

In einer Ausgestaltung des Verfahrens wird also eine Charakteristik simuliert, wobei die Simulation von einer vorgebbaren erwarteten Nutzung des Kabels abhängt. Als Eingangsgröße für die Simulation werden Messdaten des Sensors verwendet, bzw. davon abgeleitete Größen. Dies sind z.B. Belastung, Zeit, Schrittfolge sowie die Assetdaten. Assetdaten sind Daten aus der Anlage, in welcher das Kabel zum Einsatz kommt. Assetdaten können auch als Betriebsdaten bezeichnet werden. Auch Applikationsdaten sind Betriebsdaten. Assetdaten sind z.B. mechanische Größen, wie Kabeltrommeldurchmesser, Anzahl an Kabellagen, mechanische Kabeldaten, sowie Applikationsbediendaten, wie Bewegungsrichtung und Geschwindigkeit des Assets (Anlage bzw. Anlagengegenstand), Drehmoment und/oder Geschwindigkeit der Kabeltrommel. Die Applikationsdaten werden z.B. mit Kabelstresswerten korreliert (diese werden durch die Charakteristiken repräsentiert), um etwaige Abhängigkeiten zu detektieren.

In einer Ausgestaltung des Verfahrens wird eine Abnutzung des Kabels vorhergesagt. So können Wartungsinterwalle leichter geplant werden.

In einer Ausgestaltung des Verfahrens wird eine Anomalie des Kabels erkannt. So kann beispielsweise schon frühzeitig der Ort eines Versagens des Kabels erkannt werden. Um die Nutzungsdauer des Kabels zu verlängern, kann das Kabel z.B. an dem Ort, wo die Anomalie erkannt wurde, zukünftig geschont werden. So kann, z.B. an bestimmten Positionen, das Kabel schonend langsamer gefahren (z.B. auf- bzw. abgewickelt) werden.

In einer Ausgestaltung des Verfahrens können, basierend auf einem Algorithmus, Anomalien frühzeitig detektiert werden. Zudem kann durch Aggregation der Anomalien bzw. Stressbelastung als eine Funktion der Intensität und der Häufigkeit eine verbleibende Lebensdauer simuliert werden, die eine Funktion in Abhängigkeit der bisherigen Betriebscharakteristik z.B. vom Tag 1 des Betriebes, oder der Instandsetzung, oder der Reparatur darstellt.

In einer Ausgestaltung des Verfahrens werden zur Auswertung der Charakteristiken auch Betriebsdaten verwendet. Die zusätzliche Korrelation mit den Betriebsdaten zeigt z.B. optimale Betriebszustände auf und erlaubt eine Produktionsoptimierung. Frühzeitige Anomaliedetektionen ermöglichen einen passiven Eingriff (z.B. eine Information des Bedieners über eine zu hohe Produktionsgeschwindigkeit). Frühzeitige Anomaliedetektionen lassen also Situationen frühzeitig erkennen, die zu einem Ausfall führen würden, so dass ein Bediener den Betrieb rechtzeitig anpassen kann.

In einer Ausgestaltung des Verfahrens ermöglicht eine Einarbeitung bzw. Verwendung der Applikationsdaten, z.B. Drehmoment oder Kabellage, eine Verknüpfung des einen potentiellen Kabelschaden verursachenden Zustands mit ggf. problematischen Bediendaten und eine geographische Lokalisierung des Fehlers und der Fehlersituation. Dies geht über eine reine Condition Monitoring Lösung hinaus, die nur in die Vergangenheit schauen kann, aber nicht frühzeitig einen Fehler detektieren kann.

In einer Ausgestaltung des Verfahrens wird eine Aussage über den Zustand des Kabels in den Kontext mit dem Betrieb der Applikation gebracht, so dass eine Ursachenermittlung leichter ist und gegebenenfalls keine zusätzliche Beobachtung vor Ort nötig ist. Auch visuell nicht sichtbare Fehler können erkannt werden. Auch eine automatische Detektion und/oder Information an den Betreiber und Handlungsempfehlung sind nun möglich.

In einer Anlage mit einem Kabel, insbesondere einem Schleppkabel, zur elektrischen Energieversorgung, weist das Schleppkabel einen Sensor im Kabel auf, wobei Sensorsignale auswertbar sind, wobei eine Auswerteeinrichtung zur Durchführung eines Verfahrens der beschriebenen Art vorgesehen ist.

Im Folgenden wird die Erfindung beispielhaft anhand von Figuren näher dargestellt und erläutert. Es zeigen
- FIG 1: eine Anlage mit einem Schleppkabel und
- FIG 2: ein Kabel.

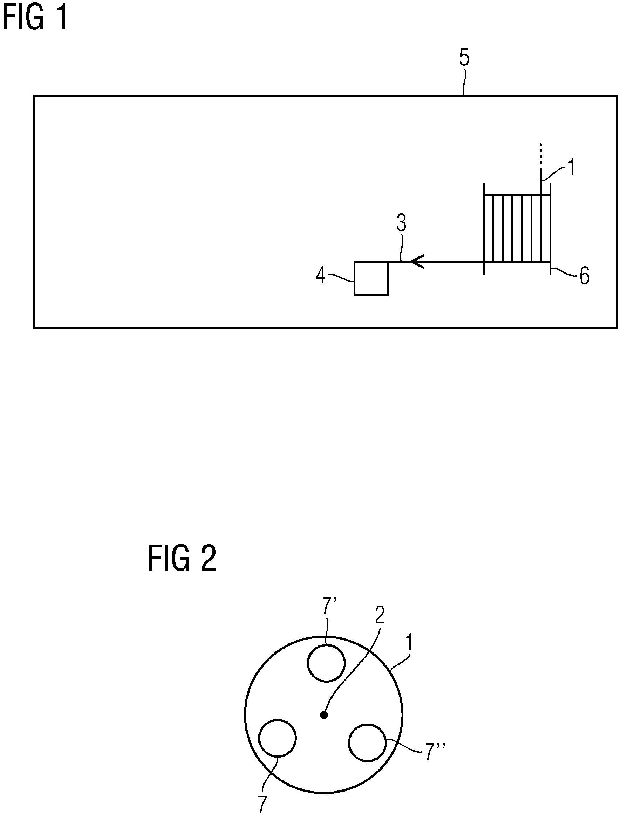

Die Darstellung nach Figur 1 zeigt eine Anlage 5. Die Anlage 5 ist eine industrielle Anlage, wie z.B. ein Kran oder ein Braunkohlebagger oder dergleichen. Die Anlage 5 weist eine Kabeltrommel 6 mit einem Schleppkabel (Kabel) 1 auf. Das Kabel 1 weist einen Sensor auf, welcher in Figur zwei dargestellt ist. Durch den Sensor werden Sensorsignale 3 gebildet, welche an eine Auswerteeinrichtung 4 übermittelt werden.

Die Darstellung nach Figur 2 zeigt ein Kabel 1, welches elektrische Leiter 7, 7'und 7" aufweist. Als Sensor bzw. als Sensorelement (Element eines Sensors) weist das Kabel 1 einen Lichtwellenleiter 2 auf. Ein derartiges Kabel 1 kann mit einem der beschriebenen Verfahren überwacht werden.

## Patentansprüche

1. Verfahren zum Betrieb eines Kabels (1), wobei das Kabel (1) einen Sensor (2) zum Erkennen einer Nutzung des Kabels (1) aufweist, wobei Sensorsignale (3) gespeichert werden, wobei sich mittels der Sensorsignale (3) eine Charakteristik für das Kabel (1) ergibt, wobei eine Vielzahl von Charakteristiken zu verschiedenen Zeiten ermittelt werden, wobei die Charakteristiken zusammen ausgewertet werden.

2. Verfahren nach Anspruch 1, wobei die Charakteristik zumindest 80% der Länge des Kabels (1) betrifft.

3. Verfahren nach Anspruch 1 oder 2, wobei eine Charakteristik simuliert wird, wobei die Simulation von einer vorgebbaren erwarteten Nutzung des Kabels (1) abhängt.

4. Verfahren nach einem der Ansprüche 1 bis 3, wobei eine Abnutzung des Kabels (1) vorhergesagt wird.

5. Verfahren nach einem der Ansprüche 1 bis 4, wobei eine Anomalie des Kabels (1) erkannt wird.

6. Verfahren nach einem der Ansprüche 1 bis 5, wobei zur Auswertung auch Betriebsdaten verwendet werden.

7. Anlage (5) mit einem Kabel (1), insbesondere einem Schleppkabel (1), zur elektrischen Energieversorgung, wobei das Schleppkabel einen Sensor (2) im Kabel (1) aufweist, wobei Sensorsignale (3) auswertbar sind, wobei eine Auswerteeinrichtung (4) zur Durchführung eines Verfahrens, nach einem der Ansprüche 1 bis 6 vorgesehen ist.
